# EUROPEAN PATENT SPECIFICATION

(11) **EP 0 821 214 B1**
(45) Date of publication and mention of the grant of the patent: **05.02.2003**
(21) Application number: 97305617.9
(22) Date of filing: 25.07.1997
(51) Int. Cl.: F41B 3/02

(54) **A catapult**
Schleuder
Lance-pierres

(30) Priority: 26.07.1996 GB 9615781
(43) Date of publication of application: 28.01.1998
(73) Proprietor: FOX DESIGN INTERNATIONAL LIMITED, Chelmsford, Essex CM3 5HQ (GB)
(72) Inventor: Fox, Clifford Royston, Chelmsford, Essex, CM3 8HQ (GB); Tasker, Kenneth, Fox International Group Ltd., Hainault, Essex IG6 3UT (GB)
(74) Representative: Crouch, David John

(56) References cited:
- FR-A- 935 277
- GB-A- 2 067 082
- GB-A- 2 136 698
- GB-A- 2 137 517
- US-A- 4 198 949
- US-A- 4 373 503

## Description

The present invention relates to a catapult having elastic material extending between two spaced apart parts of the catapult frame, in which the parts of the frame to which the elastic is attached are readily detachable.

Such a catapult is disclosed in GB-A-2,136,698A. This describes a catapult suitable for use in shooting fish bait into water. It comprises means defining a pair of spaced apart limbs, resilient strip means extending between the limbs and a ferrule connecting the resilient strip means to each limb. A ferrule is preferably fastened to a limb by a releasable bayonet fixing which is most conveniently formed by providing a pin in the side of the limb and a J-shaped slot in the ferrule for receiving the pin.

According to the present invention, there is provided a catapult having elastic material extending between two spaced apart parts of the catapult frame in which the parts of the catapult frame to which the elastic is attached are readily detachable, in which the elastic material is attached to retaining members each held loosely by a respective one of the detachable parts to enable relative rotation therebetween, and in which each detachable part is detachably connected by a screw-threaded engagement between that part and the rest of the frame.

One part of the engagement means may be formed as a spigot on one of the parts which are connected together, and the other part may comprise a generally hollow cylindrical portion which surrounds the spigot when the two parts are connected together.

Preferably the spigot extends in an intended upward direction from the frame, and the cylindrical hollow portion is a portion of the detachable part. If the detachable parts are detachable ends of respective arms of the catapult, the axis of the spigot and the hollow cylindrical portion may then be generally in an imaginary plane which contains the two arms of the catapult.

Preferably, an end of the elastic material is received in a hollow cylindrical portion of each detachable part of the catapult, and advantageously the axis of this hollow cylindrical portion extends in a plane which is common to two arms of the catapult. As a result, the catapult is symmetric about the common plane, and the elastic can be pulled selectively in both directions. This reduces the likelihood of error in firing bait when there is very little time to grab the catapult and fire.

Preferably, each detachable part is formed with an internal shoulder to retain a member to which the elastic is attached, without preventing rotation of the elastic material about its longitudinal axis.

Examples of a catapult made in accordance with the present invention will now be described with reference to the accompanying drawings, in which :
- Figure 1: is a perspective view from one side of such a catapult;
- Figure 2: is a cross-sectional view of an arm end of the catapult shown in Figure 1; and
- Figure 3: shows a cross-sectional view of a modification of that arm end.

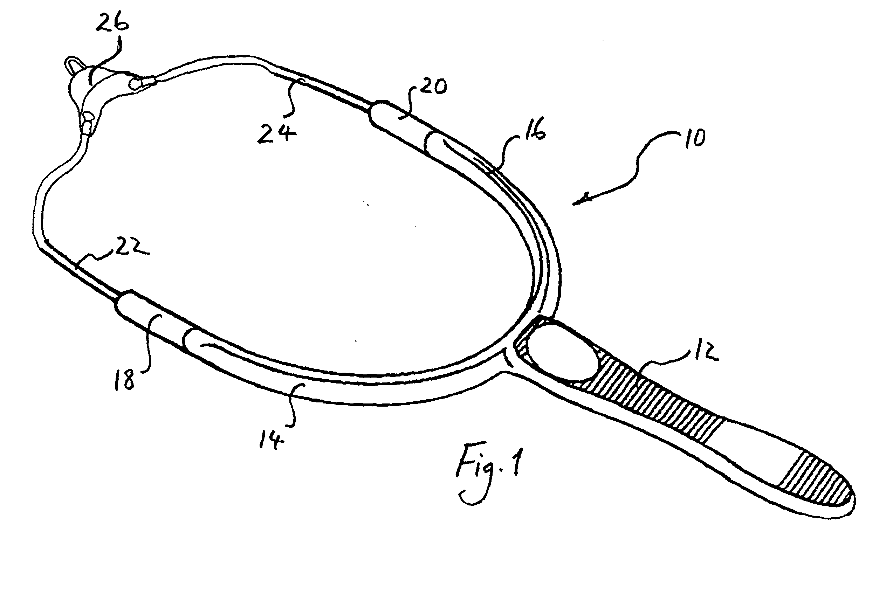

The catapult 10 shown in Figure 1 comprises a frame having a hand-grip 12 away from the top end of which extend two arms 14 and 16 of the catapult. These extend away from one another, and together constitute a generally U-shape with the hand-grip 12 integrally connected to the base of the U. The hand-grip 12 and the two arms 14 and 16 are made integrally from a single piece of injection-moulded plastics material. At each end of the arms 14 and 16 further from the hand-grip 12 there are provided detachable arm ends 18 and 20, also made of plastics material. To these, respective ends of lengths 22 and 24 of tubular elongate elastic material are attached. The other ends of these lengths 22 and 24 are attached to opposite sides of a pouch 26 of the catapult.

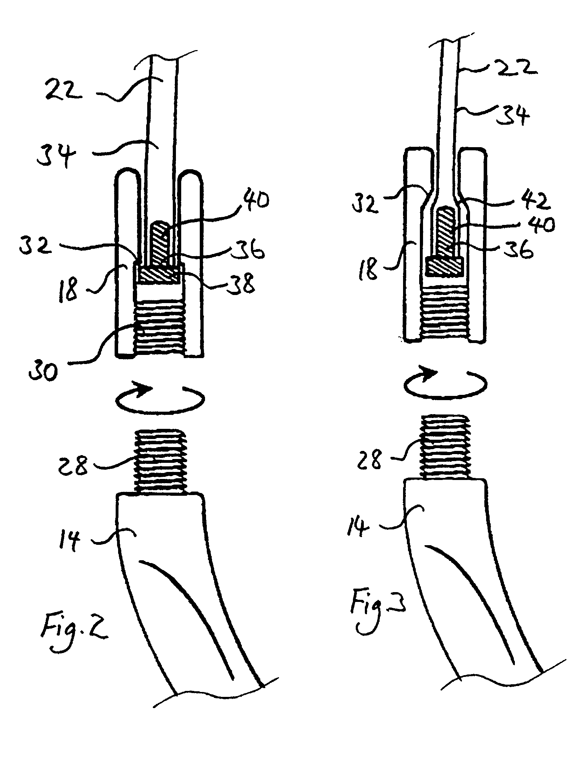

Figure 2 shows in greater detail the manner in which the arm end 18 is detachably connected to the arm 14. A precisely corresponding detachable connection is provided between the arm end 20 and the arm 16.

The main part of the arm 14 terminates at its free end with an externally screw-threaded spigot 28 which extends in an intended upward direction, generally parallel to the hand-grip 12, generally parallel also to the corresponding spigot at the free end of the other arm 16, and having its axis generally in the common plane of the arms 14 and 16.

The arm end 18 is generally cylindrical in shape and is hollow. It has an internal screw-threading 30 at its intended lower end which can screw-threadedly engage the external screw-thread spigot 38, and an internal annular shoulder 32 generally mid-way along the length of the end 18, and extending transversely thereof so that the intended upper half of the end 18 has an internal cross-section which is smaller than that of the lower half thereof, but sufficient nonetheless to receive one end 34 of the piece of elastic material 22 as a loose fit.

A retaining member 36 has a head portion 38 and a spigot 40 which is inserted into the end 34 of the piece of tubular elastic until the lip of that elastic abuts an under-side of a head 38. The spigot 40 extends in an intended upward direction from the head 38, and the diameter of the latter is greater than the internal diameter of the upper half of the end 18, so that when the catapult is in use, the end 34 of the piece of elastic 22 is retained in the end 18 by the abutment of the head 38 against the shoulder 32. At the same time, because the retaining member 36 is also held in the end 18 as a loose fit, both the end 34 of the piece of elastic 22 and the retaining member 36 can rotate about their respective longitudinal axis, so that the elastic material does not become twisted during use of the catapult.

In the modification shown in Figure 3, the shoulder 32 is positioned closer to the upper limit of the end 18, and is sloping, so that the internal cross-section of the end 18 tapers in an upward direction. Furthermore, the dimensions of the retaining member 36, the end 34 of the piece of tubular elastic 22, and the various internal cross-sections of the end 18 are such that the tubular elastic is flared at a position 42 where it meets the free end of the spigot 40, and when the catapult is in use, the end 34 of the piece of elastic 22 is retained in the arm end 18 by the abutment of this flared portion 42 against the shoulder 32.

A number of different types of elastic material and/or different pouches may be attached to respective pairs of detachable ends 18 which are all of the same construction, so that once the catapult is in use, the pouch and/or the elastic material may be readily changed simply by detaching one pair of arm ends 18 and 20, and replacing them with another pair to which the desired elastic and/or pouch has already been attached. This provides for a quick change when the catapult is in use.

Numerous variations and modifications to the illustrated catapults will readily occur to a person of ordinary skill in the art, without taking the resulting modification or variation outside the scope of the present invention. To give one example only L-shaped arms may be provided instead of the curved arms 14 and 16. The arm ends 18 and 20 may be made of cast aluminium instead of plastics material. The elastic 22 may be solid instead of tubular, and the retaining members 36 may be modified accordingly, for example by each having an eye in the spigot 40 through which the elastic can be threaded and held.

## Claims

1. A catapult (10) having elastic material (22, 24) extending between two spaced apart parts (18, 20) of the catapult frame in which the parts (18, 20) of the catapult frame to which the elastic (22, 24) is attached are readily detachable, **characterised in that** the elastic material (22, 24) is attached to retaining members (36) each held loosely by a respective one of the detachable parts (18, 20) to enable relative rotation therebetween, and **in that** each detachable part (18, 20) is detachably connected by a screw-threaded engagement (28, 30) between that part (18, 20) and the rest of the frame (14, 16).

2. A catapult according to claim 1, **characterised in that** one part of the engagement means (28, 30) is formed as a spigot (28) on one of the parts (14, 16) which are connected together, and the other part (18, 20) of the engagement means comprises a generally hollow cylindrical portion which surrounds the spigot (28) when the two parts are connected together.

3. A catapult according to claim 2, **characterised in that** the spigot (28) extends in an intended upward direction from the frame, and the cylindrical hollow portion is a portion of the detachable part (18, 20).

4. A catapult according to claim 3, **characterised in that** the detachable parts (18, 20) are detachable ends of respective arms of the catapult and the axis of the spigot (28) and the hollow cylindrical portion is generally in an imaginary plane which contains the two arms (14, 16) of the catapult (10).

5. A catapult according to any preceding claim, **characterised in that** an end of the elastic material (22, 24) is received in a hollow cylindrical portion of each detachable part (18, 20) of the catapult (10).

6. A catapult according to claim 5, **characterised in that** the axis of the said hollow cylindrical portion extends in a plane which is common to the two arms (14, 16) of the catapult (10) so that the catapult (10) is symmetric about the common plane, and the elastic can be pulled selectively in either of two opposite directions.

7. A catapult according to any preceding claim, **characterised in that** each detachable part (18, 20) is formed with an internal shoulder (32) to retain the associated retaining member (36) to which the elastic is attached, without preventing rotation of the elastic material about its longitudinal axis.

## Patentansprüche

1. Schleuder (10), die Gummimaterial (22, 24) aufweist, das sich zwischen zwei voneinander beabstandeten Teilen (18, 20) des Schleuderrahmens erstreckt, wobei die Teile (18, 20) des Schleuderrahmens, an denen das Gummi (22, 24) befestigt ist, leicht abnehmbar sind, **dadurch gekennzeichnet, dass** das Gummimaterial (22, 24) an Haltegliedern (36) befestigt ist, die von jeweils einem der abnehmbaren Teile (18, 20) lose festgehalten werden, um eine Relativdrehung dazwischen zu ermöglichen, und **dadurch, dass** jedes abnehmbare Teil (18, 20) durch einen Schraubengewindeeingriff (28, 30) zwischen dem Teil (18, 20) und dem Rest des Rahmens (14, 16) abnehmbar verbunden ist.

2. Schleuder nach Anspruch 1, **dadurch gekennzeichnet, dass** ein Teil der Eingriffseinrichtung (28, 30) als ein Zapfen (28) auf einem der Teile (14, 16), die miteinander verbunden werden, ausgebildet ist und das andere Teil (18, 20) der Eingriffseinrichtung einen allgemein hohlen zylindrischen Abschnitt aufweist, der den Zapfen (28) umgibt, wenn die zwei Teile miteinander verbunden sind.

3. Schleuder nach Anspruch 2, **dadurch gekennzeichnet, dass** sich der Zapfen (28) vom Rahmen her in einer beabsichtigten Richtung nach oben erstreckt und der zylindrische hohle Abschnitt ein Abschnitt des abnehmbaren Teils (18, 20) ist.

4. Schleuder nach Anspruch 3, **dadurch gekennzeichnet, dass** die abnehmbaren Teile (18, 20) abnehmbare Enden von jeweiligen Armen der Schleuder sind und die Achse des Zapfens (28) und des hohlen zylindrischen Abschnitts allgemein in einer imaginären Ebene liegt, die die zwei Arme (14, 16) der Schleuder (10) enthält.

5. Schleuder nach einem der vorhergehenden Ansprüche, **dadurch gekennzeichnet, dass** ein Ende des Gummimaterials (22, 24) in einem hohlen zylindrischen Abschnitt jedes abnehmbaren Teils (18, 20) der Schleuder (10) aufgenommen ist.

6. Schleuder nach Anspruch 5, **dadurch gekennzeichnet, dass** sich die Achse des hohlen zylindrischen Abschnitts in einer gemeinsamen Ebene mit den zwei Armen (14, 16) der Schleuder (10) erstreckt, so dass die Schleuder (10) um die gemeinsame Ebene herum symmetrisch ist, und das Gummi wahlweise in eine von zwei entgegengesetzten Richtungen gezogen werden kann.

7. Schleuder nach einem der vorhergehenden Ansprüche, **dadurch gekennzeichnet, dass** jedes abnehmbare Teil (18, 20) mit einer inneren Schulter (32) ausgebildet ist, um das zugehörige Halteglied (36) zurückzuhalten, an dem das Gummi befestigt ist, ohne eine Drehung des Gummimaterials um seine Längsachse zu verhindern.

## Revendications

1. Une catapulte (10), formée d'un matériau élastique (22, 24) s'étendant entre deux parties (18, 20), espacées l'une de l'autre, du châssis de catapulte, dans laquelle les parties (18, 20) du châssis de catapulte sur laquelle est fixé le matériau élastique (22, 24) sont démontables aisément, **caractérisée en ce que** le matériau élastique (22, 24) est fixé sur des organes de retenue (36), chacun étant maintenu de façon lâche par une partie respective parmi les parties détachables (18, 20), afin de permettre une rotation relative entre eux, et **en ce que** chaque partie détachable (18, 20) est reliée de façon détachable, par un élément de mise en prise à filetage (28, 30), entre cette partie (18, 20) et le reste du châssis (14, 16).

2. Une catapulte selon la revendication 1, **caractérisée en ce qu'**une partie des moyens de mise en prise (28, 30) est formée par un téton (28) sur l'une des parties (14, 16) qui sont reliées ensemble, et l'autre partie (18, 20) des moyens de mise en prise est formée d'une partie cylindrique globalement creuse, qui entoure le téton (28) lorsque les deux parties sont reliées ensemble .

3. Une catapulte selon la revendication 2, **caractérisée en ce que** le téton (28) s'étend dans une direction montante appropriée depuis le châssis, et la partie creuse cylindrique est une partie de la partie détachable (18, 20).

4. Une catapulte selon la revendication 3, **caractérisée en ce que** les parties détachables (18, 20) sont des extrémités détachables de bras respectifs de la catapulte, et l'axe, du téton (28) et de la partie cylindrique creuse, est placé globalement dans un plan imaginaire contenant les deux bras (14, 16) de la catapulte (10).

5. Une catapulte selon l'une quelconque des revendications précédentes, **caractérisée en ce qu'**une extrémité du matériau élastique (22, 24) est logée dans une partie cylindrique creuse de chaque partie détachable (18, 20) de la catapulte (10).

6. Une catapulte selon la revendication 5, **caractérisée en ce que** l'axe de ladite partie cylindrique creuse s'étend dans un plan commun aux deux bras (14, 16) de la catapulte (10), de manière que la catapulte (10) soit symétrique autour du plan commun, et l'élastique peut être tiré sélectivement dans l'une de deux directions opposées.

7. Une catapulte selon l'une quelconque des revendications précédentes, **caractérisée** en ce chaque partie détachable (18, 20) est formée d'un épaulement interne (32) devant retenir l'organe de retenue (36) associé sur lequel l'élastique est attaché, sans empêcher la rotation du matériau élastique autour de son axe longitudinal.
